# FASCICULE DE BREVET EUROPEEN

(11) **EP 1 940 962 B1**
(45) Date de publication et mention de la délivrance du brevet: **29.07.2009**
(21) Numéro de dépôt: 06709185.0
(22) Date de dépôt: 27.01.2006
(51) Int. Cl.: C08L 83/04, C09D 183/04

(54) **DISPERSIONS SILICONES AQUEUSES, FORMULATIONS NOTAMMENT DE PEINTURES LES COMPRENANT ET L'UN DE LEUR PROCEDE DE PREPARATION**
WÄSSRIGE SILIKONDISPERSIONEN, FORMULIERUNGEN, INSBESONDERE VON ANSTRICHMITTELN, DIE SIE ENTHALTEN, UND EINES IHRER VERFAHREN ZUR HERSTELLUNG DAVON
AQUEOUS SILICON DISPERSIONS, FORMULATIONS, PARTICULARLY OF PAINTS CONTAINING THEM AND ONE OF THEIR METHODS FOR THE PREPARATION THEREOF

(30) Priorité: 07.02.2005 FR 0501194
(43) Date de publication de la demande: 09.07.2008
(73) Titulaire: Bluestar Silicones France, 69486 Lyon Cedex 03 (FR)
(72) Inventeur: MARTIN, Nadia, 69006 Lyon (FR); DERUELLE, Martial, 69390 Millery (FR); BEURDELEY, Patricia, 93300 Aubervilliers (FR)
(86) Numéro de dépôt international: PCT/FR2006/000189
(87) Numéro de publication internationale: WO 2006/084972

(56) Documents cités:
- EP-A- 0 655 475
- FR-A- 2 771 098
- FR-A- 2 810 989

## Description

La présente invention concerne de nouvelles compositions de revêtements, notamment de peintures extérieures et intérieures. Ces compositions peuvent être utilisées dans différentes applications telles que peinture à l'eau, crépis, lazures, imprégnations, revêtement semi-épais (RSE) ou peintures pour façades.

L'art antérieur n'indique pas de composition de revêtement apte à réticuler correctement et suffisamment par condensation, en un élastomère ou un réticulat, qui confère à l'application finale, par exemple sous forme de peinture, une résistance à l'abrasion humide (RAH) élevée, un effet perlant et une imperméabilité à l'eau satisfaisantes.

L'un des objectifs essentiels de la présente invention est donc de proposer une nouvelle dispersion silicone aqueuse de revêtement conférant à l'application finale une hydrofugation efficace, c'est-à-dire une résistance à l'abrasion humide (RAH) élevée, une imperméabilité à l'eau, une perméabilité à la vapeur d'eau et un effet perlant satisfaisants.

Plus précisément, l'invention concerne une dispersion silicone aqueuse, contenant un ou plusieurs polyorganosiloxanes (POS) destinés à réticuler ou ayant réticulés par élimination d'eau ou d'alcool, selon le mécanisme de polycondensation intervenant, avantageusement, à température ambiante.

La présente invention concerne également un procédé parmi d'autres de préparation d'émulsion et de dispersion silicones aqueuses, notamment, du type de celles selon l'invention.

La demande du marché des producteurs de formulations du type de celles énumérées ci-dessus pour des produits écologiques, peu ou pas toxiques (notamment sans solvant organique volatil) et d'utilisation commode et aisé (lavage des outils e.g.), a suscité le développement de dispersions/émulsions aqueuses susceptibles de remplacer, avantageusement, les solutions et dispersions de liants polymères organiques et/ou de silicones dans des solvants ou composés organiques volatils (COV).

C'est ainsi que sont apparues des émulsions silicones aqueuses destinées à être utilisées comme matières premières dans la fabrication de peintures, de RSE ou de mastics et contenant une ou plusieurs huiles silicones réticulables en élastomères par condensation. De telles émulsions ont vocation à se substituer en tout ou partie aux liants polymères organiques jusqu'alors classiquement employés, notamment dans les peintures.

Les difficultés techniques rencontrées dans l'élaboration de ces émulsions silicones aqueuses sont nombreuses. On peut en distinguer une première catégorie commune à toutes les applications finales visées et une seconde catégorie plus spécifique aux peintures et RSE.

S'agissant de la première catégorie, il convient de citer en premier lieu la stabilité au stockage de ces émulsions huile dans eau (H/E). Il est clair qu'un déphasage indésirable de l'émulsion silicone aqueuse est totalement rédhibitoire dans les applications.

Il convient également de porter une grande attention aux problèmes de sécurité et de toxicité. En effet, même si ceux-ci sont relativement atténués du fait de l'emploi d'eau comme milieu de dispersion, il n'en demeure pas moins que des produits nocifs peuvent être générés in situ par hydrolyse (COV).

Par ailleurs, le temps de durcissement des silicones de l'émulsion ne doit pas être trop long après application. En outre, le réticulat ou l'élastomère qui se forme doit être doué de propriétés mécaniques convenables (dureté, élasticité, résistance à l'abrasion) adaptées à l'application concernée.

Il va également de soi que l'émulsion silicone aqueuse ou les produits préparés à partir de celle-ci, se doivent d'être d'utilisation aisée.

Enfin, il importe que, quelque soit l'utilisation visée, le matériau obtenu après application (film, revêtement, joint, comblement) adhère parfaitement au support sur lequel il est appliqué.

En ce qui concerne la deuxième catégorie de difficultés propres aux peintures et aux RSE, il faut insister sur le fait que la stabilité des émulsions de peinture est encore plus cruciale.

En outre, une peinture se doit d'être facilement applicable sous forme de film par les moyens connus : pinceau, rouleau, projection, immersion...

Il est de plus capital pour les peintures que les liants polymères qu'elles contiennent, en particulier les silicones, réticulent correctement de manière à produire un film d'élastomère dur. En d'autres termes, ce film ne doit pas être poisseux, de manière à éviter que des salissures se collent dessus. Le durcissement imparfait du film de peinture a également pour répercussion néfaste de diminuer sa durabilité et sa résistance aux agressions extérieures climatiques ou biologiques.

Il est également demandé aux peintures d'être imperméables à l'eau provenant de l'extérieur et perméables à la vapeur d'eau d'origine interne.

En résumé, les spécifications demandées aux peintures à base d'émulsions silicones aqueuses, sont :
- caractère écologique (sécurité, non toxicité),
- fort pouvoir liant et forte cohésion (RAH élevé),
- dureté synonyme de durabilité et d'aspect propre et non poisseux,
- perméabilité à la vapeur d'eau,
- caractère hydrofuge, faible absorption d'eau liquide,
- effet perlant.

Plus concrètement, la nouvelle dispersion silicone aqueuse, utilisable notamment dans la formulation de peintures, mise au point et faisant l'objet de la présente invention, est constituée essentiellement de :
a) au moins une résine polyorganosiloxanique **(A)** comportant des substituants hydroxyles condensables présents à hauteur d'au moins 0,05 % en poids ;
b) au moins un polyorganosiloxane époxyfonctionnalisé **(B),**
c) au moins un silane alkylaminé hydroxylé hydrosoluble **(C)** présent dans sa forme monomérique de formule générale **(I)** et/ou dans une forme condensée de type oligomérique 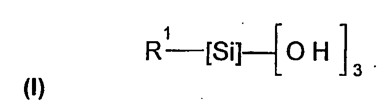 formule dans laquelle :
   - R¹ est un radical aminoalkyle ayant de 1 à 6 atomes de carbone ou un groupement de formule générale : H₂N-(CH₂)ₓR²-(CH₂)_{z}- ; avec R² représentant O, S, -NH- ou NH-CH₂-CH₂-NH- et x ≥ 2, z ≥ 2;
d) au moins un tensioactif **(TA)**,
e) éventuellement au moins un biocide **(D)**,
f) de l'eau ;et
g) éventuellement une quantité efficace d'un catalyseur de polycondensation ;
   ladite dispersion silicone aqueuse ne contenant pas de silane ayant des fonctions hydrolysables de type alcoxy -OR avec R étant un groupement hydrocarboné aliphatique en C1-C20).

Le catalyseur est, de préférence, un composé catalytique à l'étain, généralement un sel d'organoétain, introduit de préférence sous forme d'une émulsion aqueuse. Les sels d'organoétain utilisables sont décrits, en particulier dans l'ouvrage de NOLL, Chemistry and Technology of Silicones Academic Press (1968), page 337.

On peut également utiliser comme composé catalytique à l'étain soit des distannoxanes, soit des polyorganostannnoxanes, soit le produit de réaction d'un sel d'étain, en particulier d'un dicarboxylate d'étain sur du polysilicate d'éthyle, comme décrit dans le brevet US-A-3 862 919.

Le produit de réaction d'un silicate d'alkyle ou d'un alkyltrialcoxysilane sur le diacétate de dibutylétain comme décrit dans le brevet belge BE-A-842 305, peut convenir aussi.

Selon une autre possibilité, on a recours à un sel d'étain II, tel que SnCl2 ou l'octoate stanneux.

Les sels d'étain préférés sont les bischélates d'étain (EP-A-147 323 et EP-A-235 049), les dicarboxylates de diorganoétain et, en particulier, les diversatates de dibutyl-ou de dioctylétain (brevet britannique GB-A-1 289 900), le diacétate de dibutyl- ou de dioctylétain, le dilaurate de dibutyl-ou de dioctylétain ou les produits d'hydrolyse des espèces précitées (e.g. les diorgano et polystannoxanes).

Selon un mode particulièrement avantageux, la dispersion silicone aqueuse selon l'invention ne présente pas de catalyseur de polycondensation et est constituée essentiellement de :
a) au moins une résine polyorganosiloxanique **(A)** comportant des substituants hydroxyles condensables présents à hauteur d'au moins 0,05 % en poids ;
b) au moins un polyorganosiloxane époxyfonctionnalisé **(B),**
c) au moins un silane alkylaminé hydroxylé hydrosoluble **(C)** présent dans sa forme monomérique de formule générale **(I)** et/ou sous une forme condensée de type oligomérique : 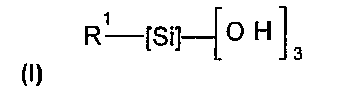
   - R¹ est un radical aminoalkyle ayant de 1 à 6 atomes de carbone ou un groupement de formule générale : H₂N-(CH₂)ₓR²-(CH₂)_{z}- ; avec R² représentant O, S, -NH- ou NH-CH₂-CH₂-NH- et x ≥ 2, z ≥ 2;
d) au moins un tensioactif **(TA),**
e) éventuellement au moins un biocide **(D),** et
f) de l'eau ;
   ladite dispersion silicone aqueuse ne contenant pas de silane ayant des fonctions hydrolysables de type alcoxy -OR avec R étant un groupement hydrocarboné aliphatique en C1-C20).

Selon un mode préféré de l'invention, la dispersion aqueuse se présente sous la forme d'une émulsion huile/eau.

Le problème de l'amélioration des caractéristiques mécaniques et rhéologiques des peintures contenant ce genre d'émulsions, a été résolu par les inventeurs, qui ont eu le grand mérite de comprendre que la solution passait par la sélection d'un silane aminé, hydroxylé et hydrosoluble ne présentant pas de fonctions alcoxylés par des radicaux alkyles organiques associé à une résine polyorgnosiloxane présentant des fonctions hydroxyles et à un polyorganosiloxane époxyfonctionnalisé.

Contre toute attente, il apparaît que cette dispersion est stable durablement et qu'elle satisfait aux objectifs assignés d'amélioration de la RAH, de facilité de préparation et d'utilisation, de barrière sélective aux échanges d'eau forme liquide ou forme vapeur, de sécurité/non toxicité et d'améliorer l'effet perlant de peinture à base de cette dispersion.

En outre, il est particulièrement surprenant de constater qu'après mûrissement / réticulation la dispersion est toujours filmogène. En effet, nonobstant leur état réticulé et leur masse moléculaire augmentée, on observe à la mise sous forme de film, que les gouttelettes de résine **(A)** coalescent et que la dispersion sèche.

La réticulation en émulsion - caractéristique de l'invention - permet d'accroître, in situ, le poids moléculaire moyen de la résine **(A)** et sa viscosité. Avant sa réticulation, la résine **(A)** hydroxylée présente un poids moléculaire moyen en poids Mw suffisamment bas et donc, de fait, une viscosité suffisamment basse, pour pouvoir être émulsifiée. Il n'est pas nécessaire de prédiluer cette résine dans un solvant pour pouvoir la mettre en émulsion selon les procédures classiques.

En conséquence, cette dispersion selon l'invention comprend, après réticulation, un réticulat ou un élastomère silicone doué de propriétés mécaniques, (notamment de résistance à l'abrasion), améliorées, sans utiliser de solvants toxiques et dangereux.

Les constituants **(A), (B), (C), (TA)** et **(D)** de la dispersion sont définis dans le présent exposé au travers de leur structure chimique initiale, c'est-à-dire celle qui les caractérisent avant émulsification. En effet, dès lors qu'ils sont milieu aqueux, ils se transforment par hydrolyse/condensation et leur structure devient alors difficilement définissable.

Le constituant essentiel de la dispersion sur le plan pondéral est la résine polyorganosiloxane **(A).** Les groupements hydroxyles de cette résine sont préférentiellement portés par les motifs T, mais une substitution hydroxyle des motifs M et/ou D et/ou éventuellement Q, n'est pas à exclure. Le taux d'hydroxylation est exprimé en % en poids. Selon ce mode d'expression, l'hydroxylation minimale est, de préférence, égale à 0,05 %. En pratique, il est supérieur ou égal à 0,3 % et plus préférentiellement encore compris entre 0,5 % et 3 %.
En tout état de cause, il convient que ce taux d'hydroxylation soit suffisant pour garantir une réticulation correcte et conforme au niveau attendu.

Il est rappelé que dans la terminologie de la chimie des silicones on définit les motifs siloxaniques M, D, T, Q comme suit :

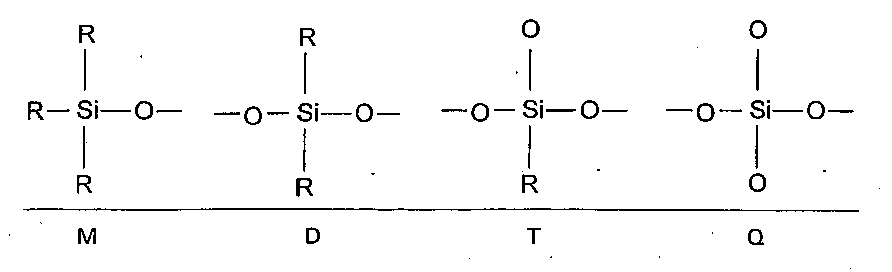

Les résines plus particulièrement sélectionnées sont celles du type T(OH), DT(OH), DQ(OH), DT(OH), MQ(OH), MDT(OH) MDQ(OH) ou les mélanges de celles-ci. Dans ces résines, chaque groupement OH est porté par un atome de silicium appartenant à un motif D, T ou Q.
Ces résines sont des produits de condensation (mono ou polycondensation-hétéro ou homo condensation) de monomères, d'oligomères ou de polymères POS porteurs de groupements condensables, de préférence de nature hydroxylique.

De manière préférentielle, la résine polyorganosiloxanique **(A)** comprend avant émulsification :
- des substituants hydroxyles condensables et présents à hauteur d'au moins 0,05 % en poids ; et
- des motifs siloxyles D, T et éventuellement M et/ou Q, les motifs siloxyles T étant présents dans un % molaire compris entre 50 et 85 % et de préférence entre 55 et 80 %.
   Selon un mode de réalisation particulièrement avantageux, la résine polyorganosiloxanique **(A)** est une résine liquide polyorganosiloxane de type T(OH), DT(OH), DQ(OH), DT(OH), MQ(OH), MDT(OH) MDQ(OH) ou les mélanges de celles-ci et de préférence MDT(OH), DT(OH) ou les mélanges de celles-ci.

Toutes les viscosités dont il est question dans le présent exposé correspondent à une grandeur de viscosité dynamique à 25° C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Selon une variante préférée de l'invention, le silane alkylaminé hydroxylé hydrosoluble **(C)** est l'aminopropyltrihydroxysilane.

Selon un mode préféré de l'invention, le silane alkylaminé hydroxylé est présent jusqu'à 15% en poids par rapport au poids total de la dispersion, de préférence présent jusqu'à 10% et encore plus préférentiellement compris entre 0,5 et 7 % en poids.

Le polyorganosiloxane époxyfonctionnalisé **(B)** de la dispersion silicone aqueuse selon l'invention comprend au moins un radical **Y** époxy-fonctionnel, relié au silicium par l'intermédiaire d'un radical divalent contenant de 2 à 20 atomes de carbone et pouvant contenir au moins un hétéroatome de préférence l'oxygène, porteur d'au moins un motif époxy, Y étant de préférence sélectionné par les radicaux suivants :

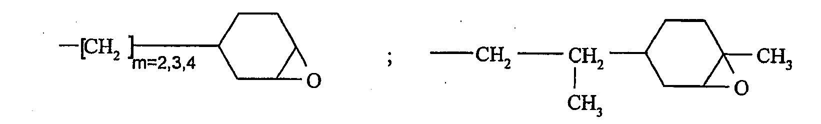

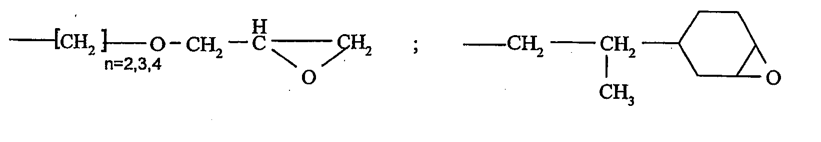

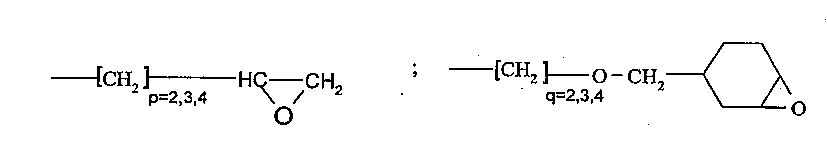

Selon un mode préféré de l'invention, le polyorganosiloxane époxyfonctionnalisé **(B)** est constitué de motifs de formule **(V)** et terminé par des motifs de formule **(VI)** et/ou constitué de motifs de formule **(V)** représentées ci-dessous : 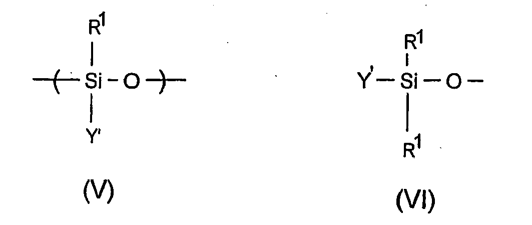 dans lesquelles :
- les symboles **R1** sont semblables ou différents et représentent :
   un radical alkyle linéaire ou ramifié contenant 1 à 8 atomes de carbone, les radicaux alkyles étant de préférence méthyle, éthyle, propyle, et octyle,
   • un radical cycloalkyle contenant entre 5 et 8 atomes de carbone cycliques, éventuellement substitué,
   • un radical aryle contenant entre 6 et 12 atomes de carbone pouvant être substitué, de préférence phényle ou dichlorophényle,
   • une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles **Y'** sont semblables ou différents et représentent :
   - le groupement **R1,** et/ou
   - un groupement époxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
   - avec l'un au moins des symboles **Y'** représentant un groupement époxyfonctionnel.

Selon un mode préféré de l'invention, les groupements organofonctionnels Y' du type époxy sont choisis parmi les formules suivantes :

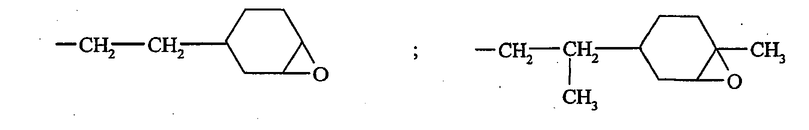

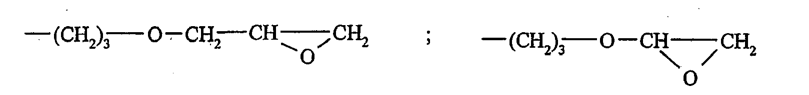

Le polyorganosiloxane époxyfonctionnalisé **(B)** peut être soit linéaire soit cyclique.

Lorsqu'il s'agit de polyorganosiloxanes cycliques, ceux-ci sont constitués de motifs (II) qui peuvent être, par exemple, du type dialkylsiloxy ou alkylarylsiloxy. Ces polyorganosiloxanes cycliques présentent une viscosité de l'ordre de 1 à 5 000 mPa.s.

L'obtention de tels polyorganosiloxanes fonctionnalisés est parfaitement à la portée de l'homme du métier de la chimie des silicones.

Quand on met en oeuvre de l'agent tensioactif **(TA)** dans la dispersion suivant l'invention, il s'agit, de préférence, d'un tensioactif non ionique.

Dans le cadre de la présente invention des agents tensioactifs anioniques peuvent éventuellement être employés. A titre d'exemples, on peut citer les sels des métaux alcalins des acides hydrocarbonés aromatiques sulfoniques ou alkylsulfuriques et les agents tensioactifs non ioniques préférés sont les alkylphénols polyoxyéthylénés ou les alcools gras polyoxyéthylénés.

La quantité de tensioactif utilisable est celle couramment mise en oeuvre pour la mise en émulsion telle que décrite en particulier dans le brevet US-A-2 891 920.

Les tensioactifs non ioniques (de préférence), ioniques ou amphotères, peuvent être employés seuls ou en mélange entre eux.

En pratique, la dispersion selon l'invention comprend de 30 à 90 % de préférence de 30 à 60 % en poids d'eau pour 70 à 10 % de préférence 70 à 40 % en poids de phase non-aqueuse.

Un deuxième objet de l'invention concerne un procédé de préparation d'une dispersion silicone aqueuse, utilisable notamment dans la formulation de peintures, caractérisé en ce qu'il comprend les étapes essentielles successives ou non, suivantes :
a) préparation:
   - d'un pré-mélange **I** comprenant au moins une résine polyorganosiloxanique **(A)** telle que définie ci-dessus, et d'un pré-mélange **II** comprenant au moins un polyorganosiloxane époxyfonctionnalisé (B) tel que défini ci-dessus, ou
   - d'un pré-mélange **III** comprenant au moins une résine polyorganosiloxanique **(A)** telle que définie ci-dessus et au moins un polyorganosiloxane époxyfonctionnalisé **(B)** tel que défini ci-dessus,
b) mise en émulsion avec de l'eau et en présence d'au moins un tensioactif **(TA):**
   - de chaque pré-mélange **I** et **II** obtenu à l'étape a); ou
   - du pré-mélange **III**, et
c) mélange :
   - des émulsions obtenues à l'étape b) issues des pré-mélanges **I** et **II** avec au moins un silane alkylaminé hydroxylé hydrosoluble **(C)** tel que défini ci-dessus, ou
   - de l'émulsion obtenue à l'étape b) issues du pré-mélange **III** avec au moins un silane alkylaminé hydroxylé hydrosoluble **(C)** tel que défini ci-dessus;
d) éventuel mûrissement de la dispersion issue de l'étape c) de manière que s'opère une réticulation par condensation et en émulsion de la résine, au sein des gouttelettes de phase silicone dispersée, pour obtenir in fine une dispersion

Un.troisième objet de l'invention concerne une formulation aqueuse utilisable notamment dans la formulation de peintures, comprenant :
- une dispersion silicone aqueuse telle que définie ci-dessus, ou issue du procédé de préparation tel que défini ci-dessus, ladite dispersion silicone étant présente de préférence jusqu'à 150 % en poids par rapport au poids total d'une ou des dispersions organiques (liant(s) et encore plus préférentiellement entre 40 et 100 % en poids;
- une charge siliceuse ou non, de préférence sélectionnée parmi les produits suivants : silice précipitée ou non, silice colloïdale ou en poudre, carbonates, talc, TiO2 et leurs mélanges ; et
   au moins l'un des composés énumérés ci-après :
- une ou plusieurs dispersions organiques (liants), choisies de préférence parmi celles comprenant des (co)polymères de styrène et/ou de l'acide (méth)acrylique;
- un ou plusieurs épaississants choisi, de préférence, parmi les épaississants cellulosiques acryliques, les polyuréthanes, les gommes naturelles et leurs mélanges ;
- un ou plusieurs agents de coalescence choisi, de préférence, parmi les solvants organiques et plus préférentiellement encore parmi les glycols et/ou les coupes pétrolières aliphatiques ;
- un ou plusieurs mouillants, dispersants de préférence choisi parmi les phosphates et/ou les polyacryliques ;
- un ou plusieurs agents de tension ;
- un ou plusieurs agents de neutralisation ;
- un ou plusieurs biocides
- un ou plusieurs diluant ;
- un ou plusieurs plastifiants, choisis, de préférence parmi les huiles silicones non réactives ;
- un ou plusieurs antimousses ;
- un ou plusieurs pigments ou colorants (organiques ou minéraux).

Le dernier objet de l'invention concerne une peinture caractérisée en ce qu'elle comprend :
- la dispersion silicone aqueuse selon l'invention,
- la dispersion silicone aqueuse obtenue par mise en oeuvre du procédé selon l'invention, ou
- la formulation aqueuse selon l'invention.
   La peinture selon l'invention peut être appliquée par exemple sur des façades selon les techniques habituelles. A titre d'exemple, elle peut être appliquée sur les surfaces par tout moyen convenable tel que pinceau, brosse, pulvérisateur, etc... Les surfaces sur lesquelles la composition de revêtement selon l'invention est applicable sont de nature diverse : par exemple, métal tel que l'aluminium, bois, ciment, brique avec ou sans enduction préalable par un primaire d'adhérence.
   Les Exemples et Tests suivants sont donnés à titre illustratif. Ils permettent notamment de mieux comprendre l'invention et de faire ressortir tous ses avantages et entrevoir quelques variantes de réalisation.

### A) Matières premières mises en oeuvre

- Résine polyorganosiloxanique **(A)**: résine méthyle silicone hydroxylée MDTOH avec un taux d'hydroxyle de 0,7 %. en poids,
- Polyorganosiloxane (POS) époxyfonctionnalisé **(B)**, 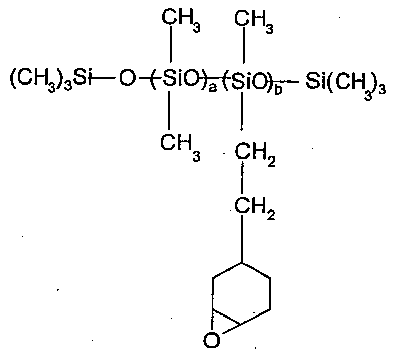 a=70, b=7
- silane alkylaminé hydroxylé hydrosoluble **(C) :** hydrolysat aqueux de gamma-amino-propyltriéthoxysilane à 20% de matières actives, duquel l'alcool a été éliminé par stripping (produit commercial OSI de type VS142)
- Silane à groupement alcoxy : OTES = Octyltriéthoxysilane
- Tensioactifs **(TA) :** un alcool gras (chaîne de 13 carbones) éthoxylé (8 motifs éthoxy), commercialisé sous la dénomination ROX^{©} par la Société RHODIA CHIMIE
- Emulsion catalysante **(Cat):** émulsion de dioctyldilaurate d'étain à 35 % de matière active en étain réalisée avec un tensioactif du type alcool polyvinylique, en l'occurrence celui commercialisé sous la marque RHODOVIOL^{©}.
- OTES = Octyltriéthoxysilane.

### B) Méthodologie pour la préparation des émulsions

Plusieurs protocoles de préparation de dispersions sont envisageables. Sans que cela ne soit limitatif, on retient dans les présents exemples celui consistant à :
1 - mélanger l'eau et le ou les tensioactifs **(TA),**
2 - incorporer dans ce mélange eau + la/les résine(s) polyorganosiloxanique(s) **(A),** le polyorganosiloxane époxyfonctionnalisé **(B),** cette incorporation étant réalisée sous agitation de manière à obtenir une émulsion eau dans huile ;
3 - procéder à l'inversion de l'émulsion eau/huile (E/H) obtenue à l'étape 2 par broyage (broyeur MORITZ) pour obtenir in fine, une émulsion huile dans eau (H/E).
4 - réaliser les post-ajouts par mélange du/des silane(s).

Une variante consiste au mélange à l'étape 2 de deux émulsions, l'une contenant la résine polyorganosiloxanique **(A)** et l'autre le polyorganosiloxane époxyfonctionnalisé **(B).**
Pour les tests comparatifs, les constituants mis en oeuvre varient suivant les cas.

### C) Test de la résistance à l'abrasion humide (RAH) :

Une peinture appliquée à l'intérieur ou extérieure doit pouvoir se nettoyer facilement sans être dégradée. Pour ce type de produit, le pouvoir liant du polymère, c'est à dire son aptitude à assurer la cohésion de l'ensemble, est un élément déterminant.

Un moyen de quantifier cette propriété consiste à évaluer la résistance à l'abrasion humide d'une peinture.

### DEFINITIONS DE LA RESISTANCE A L'ABRASION HUMIDE

Selon la norme ISO 11998 = Perte d'épaisseur d'un film de peinture après un cycle d'abrasion défini et réalisé à l'aide d'un appareil normalisé.

### PRINCIPE

Evaluation de l'aptitude d'un feuil de peinture d'épaisseur définie, à résister à l'action abrasive exercée par le mouvement de va et vient d'une brosse ou d'un tampon abrasif, en milieu aqueux.

### EXPRESSION DES RESUL TATS

### Pour la norme ISO 11998

- Pour chaque éprouvette, appliquer la formule suivante : Δₘ * 10⁶ / (39 * 387 dₛ) où :
   Δₘ est la différence de poids des éprouvette avant et après le test,
   dₛ est la densité sèche de la peinture.
- Pour chaque peinture, calculer la moyenne et l'écart-type.
- Exprimer le résultat en µm, ce qui correspond à une perte de l'épaisseur du film de peinture. Il existe une classification des peintures en fonction de la perte d'épaisseur et du nombre de cycles d'abrasion :
   Classe 1 : < 5µm à 200 frottements, pour les peintures à taux de liant élevé.
   *Classe* 2 : *≥5µm et <20 µm à 200 frottements, la peinture est lessivable.*
   *Classe 3 : ≥20µm et < 70µm à 200 frottements, la peinture est lavable.*
   *Classe 4 : <* 70 µm *à 40 frottements*
   *Classe* 5 : *≥70 µm à 40 frottements.*

### D) Perméabilité à l'eau (W24) : Test normalisé d'absorption d'eau liquide

Ce mode opératoire (norme NF EN 1062-3 , Février 1999).spécifie une méthode de détermination de la perméabilité à l'eau liquide des produits de peinture et de produits assimilés, appliqués sur la maçonnerie et béton extérieurs. Cette méthode est applicable aux produits de peinture et systèmes de revêtement pour supports poreux comme par exemple : briques, béton et enduits.

### PRINCIPE

Les revêtements pour maçonnerie et béton extérieurs jouent un rôle important pour prévenir la pénétration de l'eau de ruissellement dans les supports minéraux poreux. Ce critère est évalué au moyen de blocs minéraux de grande porosité dont l'une des faces est revêtue par le revêtement ou le système de revêtement. L'éprouvette est plongée dans de l'eau, dans des conditions déterminées et les éprouvettes sont pesées à des intervalles de temps réguliers. La perméabilité à l'eau liquide est déterminée par le changement de masse lorsque le changement de masse est directement proportionnel à la racine carrée de l'intervalle de temps.

### EXPRESSION DES RESULTATS

Déterminer l'augmentation de la masse d'eau comme étant la fonction de la racine carrée du temps. La pente de la partie linéaire de la courbe est le coefficient de la transmission de l'eau liquide W en Kg/m².Vt des heures. Pour obtenir le coefficient W il est nécessaire de diviser l'augmentation de la masse par la surface, en m², ou diviser la pente par la surface. La surface sera la surface non couverte par la paraffine. Normalement, W est calculé pour une période de 24 heures. Si la partie de la courbe est obtenue avant 24 heures, le nombre d'heures doit être indiqué comme indice de W (ex : W6).
CPV = capacité pigmentaire volumique.

### 2) MODE OPERATOIRE DU TEST ACCELERE D'ABSORPTION D'EAU

### Mode opératoire

L'absorption d'eau est influencée par les composés volatils et solubles dans l'eau. En pratique ces composés peuvent s'évaporer du revêtement pendant son exposition à l'extérieur ou être lessivés par la pluie, le revêtement doit subir un vieillissement « accéléré » avant la détermination de son absorption en eau liquide (2 lavages à la place des 3 prévus dans le mode opératoire classique).

### Préparation des éprouvettes

➢ Appliquer sur un carreau de grès un film de peinture de 300 µm (2 éprouvettes pour une même peinture).
➢ Laisser **sécher la journée** en salle climatisée.
➢ Placer les éprouvettes **le soir dans une étuve** à **30°C pour la nuit. Le lendemain matin,** mettre l'étuve **à 40°C et laisser les éprouvettes 48 heures** (2 jours).
➢ Mettre en salle climatisée les éprouvettes pour la matinée.
➢ L'après-midi, paraffinage des éprouvettes en utilisant un cache en Lénéta disposé sur le revêtement .
➢ Conditionnement en salle climatisée 1 journée minimum.

### Vieillissement accéléré

➢ Placer les éponges dans un bac. Les immerger avec de l'eau déminéralisée jusqu'à 0.5 cm en dessous du la hauteur de l'éponge. Déposer l'éprouvette sur le filtre, imbibé d'eau. Laisser ainsi le système 24 h.
➢ Sécher l'éprouvette avec du papier absorbant puis la placer 24 h à l'étuve 50°C.
➢ Replacer l'éprouvette en contact avec l'eau par le biais du filtre/éponge pendant 24 h.
➢ Sécher l'éprouvette avec du papier absorbant puis la placer 24 h à l'étuve 50°C.
➢ Stocker les éprouvettes en salle conditionnée pendant 2-3 jours.

### Détermination de l'absorption en eau liquide.

➢ Après le conditionnement en salle climatisée, peser l'éprouvette revêtue et vieillie. La disposer sur l'éponge mouillée par le biais du filtre.
➢ Après 1 h, 2h, 3h, 6h et 24h, peser l'éprouvette dont la surface sera préalablement séchée avec du papier absorbant (entre chaque pesée on replacera l'éprouvette sur l'éponge).

### Expression des résultats

L'augmentation de la masse d'eau est fonction de la racine carrée du temps (Δmasse = f(√t)).

La pente de la partie linéaire de la courbe est W, le coefficient de la transmission de l'eau liquide en kg/(m².√t). pour obtenir le coefficient W il est nécessaire de diviser l'augmentation de masse par la surface en m² du revêtement ou diviser la pente par la surface.

Normalement, W est calculé pour une période de 24 heures. Si la partie linéaire de la courbe est obtenue avant 24 heures, le nombre d'heures doit être indiqué comme indice de W (ex : W₆). Tracer la courbe d'absorption d'eau en kg/m² en fonction de √temps. On obtient une droite. **La pente est égale au coefficient de transmission W.** Pour chaque revêtement étudié, la moyenne et l'écart type de W₂₄ seront calculés et présentés.

### Exemple 1 : préparation des émulsions:

**TABLEAU 1**

| Ref | Résine | Composé (C) Silane aminé hydrosoluble | OTES | Composé (B) POS époxy | Emulsion catalysante | Composé (TA)/résine | Extrait sec en % étuve (1g 1h 105°C) | D moyen µm |
|---|---|---|---|---|---|---|---|---|
| Exemple 1 (Comp.) | 58.9 | 0 | 0 | 0 | 0 | 5% | 52.2 | 0.38 |
| Exemple 2 (Comp.) | 57.5 | 2.5 | 0 | 0 | 0 | 5% | 56.8 | 0.34 |
| Exemple 3 (Comp.) | 56.1 | 5 | 0 | 0 | 0 | 5% | 52.5 | 0.39 |
| Exemple 4 (Inv.) | 56.1 | 2.5 | 0 | 2.5 | 0 | 5% | 55.4 | 0.40 |
| Exemple 5 (Inv.) | 57.6 | 2.5 | 0 | 2.5 | 0 | 6% | 58.9 | 0.33 |
| Exemple 6 (Inv.) | 57.6 | 2.5 | 0 | 2.5 | 0 | 6% | 58.6 | 0.33 |
| Exemple 7 (Comp.) | 57.9 | 2.5 | 2.5 | 0 | 0.15 | 5% | 58.4 | 0.35 |

Les valeurs du Tableau 1 sont exprimées en % en poids par rapport au poids total de l'émulsion.

Le diamètre moyen est mesuré au moyen d'un granulomètre Malvern Master sizer 2000 /Hydro 2000G.

### Exemple 2 : Préparation des peintures

### Réf : Peinture contrôle CPV=70%

| CONSTITUANTS | | Poids | Volume | Fonction | Fournisseur |
|---|---|---|---|---|---|
| EAU | | 22,13 | 22.13 | | |
| HEXAMETAPHOSPHATE DE SODIUM SOL A 10% | | 0,54 | 0,50 | dispersant | |
| PROXEL GXL | | 0,32 | 0,28 | bactéricide | AVECIA |
| RHODOLINE DP 1130 | | 0,32 | 0,25 | dispersant | RHODIA |
| RHODOUNE DF 6002 | | 0.11 | 0,12 | antimousse | RHODIA |
| NATROSOL 250 HR | | 0,21 | 0,14 | épaississant cellulosique | AQUALON |
| disperser pendant 15 mn | | | | | |
| OXYDE DE TITANE TIONA 568 | | 12,98 | 3,25 | pigment TiO2 | MILLENNIUM |
| OMYACARB 5-GU | | 23,62 | 8,75 | CaCO3 | OMYA |
| CALIBRITE SL | | 9,90 | 3,60 | CaCO3 | OMYA |
| TALC LUZENAC 10 M0 | | 3,92 | 1,41 | talc | LUZENAC |
| PLASTORIT 000 | | 3,92 | 1,43 | talc | NAINTSCH |
| CELITE 281 | | 2,94 | 1,28 | silice diatomée | CELITE |
| disperser à grande vitesse RHODOPAS DS 910 | | 9,54 | 9,17 | styrène acrylique | RHODIA |
| Emulsion silicone de l'Exemple 1 | | 7,94 | 7,49 | émulsion silicone | RHODIA |
| TEXANOL | | 1,18 | 1,24 | agent de coalescence | EASTMANN |
| RHODOLINE DF 6002 | | 0,11 | 0,12 | antimousse | RHODIA |
| RHODOLINE RH 5210 | | 0,32 | 0,31 | épaississant polyuréthane | RHODIA |

| Total | | 100,00 | 61,46 | | |
|---|---|---|---|---|---|
| CARACTERISTIQUES DE LA PEINTURE : | | | | | |
| Densité: | 1,63 | | | | |
| Extrait sec en poids % | 67,66 | | | | |
| Extrait sec en volume % | 47,30 | | | | |

| CARACTERISTIQUES DU FILM SEC : | | | | | |
|---|---|---|---|---|---|
| Densité du sec | 2,33 | | | | |
| CVP (avec adjuvant) | 67,78 | | | | |
| CVP (sans adjuvant) | 69,33 | | | | |

### Evaluation des peintures

**Tableau 2**

| Emulsions silicones utilisées dans la formulation peinture | W24 normalisé Kg/m2.h0.5 | RAH normalisé µm |
|---|---|---|
| Exemple 1 (Comp.) | 0.10 | 30 |
| Exemple 2 (Comp.) | 0.08 | 12 |
| Exemple 3 (Comp.) | 0.16 | 10 |
| Exemple 7 (Comp.) | 0.09 | 10 |

**Tableau 3**

| Emulsions silicones utilisées dans la formulation peinture | W24 accéléré Kg/m2.h0.5 | RAH normalisé µm |
|---|---|---|
| Exemple 2 (Comp.) | 0.15 | - |
| Exemple 4 (Inv.) | 0.09 | - |
| Exemple 5 (Inv.) | 0.11 | 9 |
| Exemple 6 (Inv.) | 0.09 | 12 |

Les résultats montrent que la dispersion selon l'invention permet de s'affranchir de l'utilisation d'un catalyseur et d'un silane alcoxylé (couramment utilisés dans les formulations silicones aqueuses pour peinture). Ceci simplifie d'autant plus la formulation et le procédé de fabrication, ce qui sur le plan coût de production est particulièrement profitable. Les dispersions selon l'invention permettent d'obtenir des valeurs de W24 permettant de les classer dans les peintures à faible perméabilité à l'eau liquide.

De plus, les peintures selon l'invention présentent après application et séchage un effet perlant acceptable pour l'application visée.

## Revendications

1. Dispersion silicone aqueuse, utilisable notamment dans la formulation de peintures constituée essentiellement de :
a) au moins une résine polyorganosiloxanique **(A)** comportant des substituants hydroxyles condensables présents à hauteur d'au moins 0,05 % en poids
b) au moins un polyorganosiloxane époxyfonctionnalisé **(B),**
c) au moins un silane alkylaminé hydroxylé hydrosoluble **(C)** présent dans sa forme monomérique de formule générale **(I)** et/ou dans une forme condensée de type oligomérique 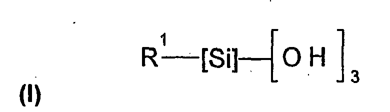 formule dans laquelle :
- R¹ est un radical aminoalkyle ayant de 1 à 6 atomes de carbone ou un groupement de formule générale : H₂N-(CH₂)ₓR²-(CH₂)_{z} ; avec R² représentant O, S, -NH- ou NH-CH₂-CH₂-NH- et x ≥ 2, z ≥ 2;
d) au moins un tensioactif **(TA),**
e) éventuellement au moins un biocide **(D),**
f) de l'eau ;et
g) éventuellement une quantité efficace d'un catalyseur de polycondensation ;
ladite dispersion silicone aqueuse ne contenant pas de silane ayant des fonctions hydrolysables de type alcoxy -OR avec R étant un groupement hydrocarboné aliphatique en C1-C20).

2. Dispersion silicone aqueuse selon la revendication 1, utilisable notamment dans la formulation de peintures constituée essentiellement de :
a) au moins une résine polyorganosiloxanique **(A)** comportant des substituants hydroxyles condensables présents à hauteur d'au moins 0,05 % en poids;
b) au moins un polyorganosiloxane époxyfonctionnalisé **(B),**
c) au moins un silane alkylaminé hydroxylé hydrosoluble **(C)** présent dans sa forme monomérique de formule générale **(I)** et/ou dans une forme condensée de type oligomérique 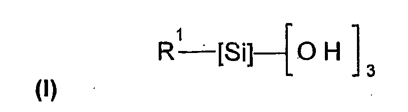 formule dans laquelle :
- R¹ est un radical aminoalkyle ayant de 1 à 6 atomes de carbone ou un groupement de formule générale : H₂N-(CH₂)ₓR²-(CH₂)_{z}- ; avec R² représentant O, S, -NH- ou NH-CH₂-CH₂-NH- et x ≥ 2, z ≥ 2;
d) au moins un tensioactif **(TA),**
e) éventuellement au moins un biocide **(D),** et
f) de l'eau ;
ladite dispersion silicone aqueuse ne contenant pas de silane ayant des fonctions hydrolysables de type alcoxy -OR avec R étant un groupement hydrocarboné aliphatique en C1-C20).

3. Dispersion silicone aqueuse selon l'une des revendications précédentes **caractérisée en ce que** la dispersion aqueuse se présente sous la forme d'une émulsion huile/eau.

4. Dispersion silicone aqueuse selon l'une des revendications précédentes dans laquelle le silane alkylaminé hydroxylé hydrosoluble **(C)** est présent jusqu'à 15% en poids par rapport au poids total de la dispersion, de préférence présent jusqu'à 10% et encore plus préférentiellement compris entre 0,5 et 7 % en poids.

5. Dispersion silicone aqueuse selon l'une des revendications précédentes dans laquelle le polyorganosiloxane époxyfonctionnalisé **(B)** comprend au moins un radical **Y** époxy-fonctionnel, relié au silicium par l'intermédiaire d'un radical divalent contenant de 2 à 20 atomes de carbone et pouvant contenir au moins un hétéroatome de préférence l'oxygène, porteur d'au moins un motif époxy, Y étant de préférence sélectionné par les radicaux suivants :

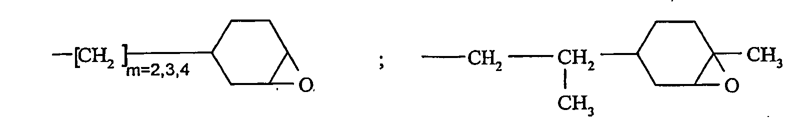

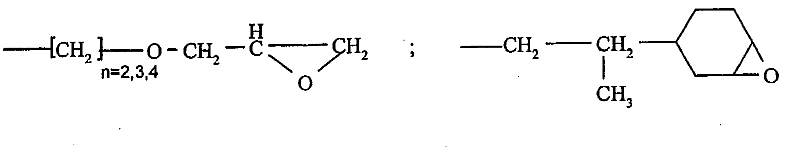

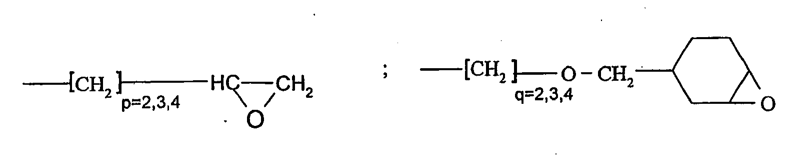

6. Dispersion silicone aqueuse selon l'une des revendications précédentes dans laquelle le polyorganosiloxane époxyfonctionnalisé **(B)** est constitué de motifs de formule **(V)** et terminé par des motifs de formule **(VI)** et/ou constitué de motifs de formule **(V)** représentées ci-dessous : 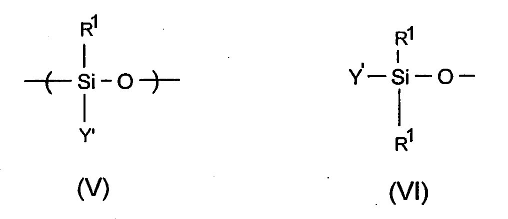 dans lesquelles :
- les symboles **R1** sont semblables ou différents et représentent :
• un radical alkyle linéaire ou ramifié contenant 1 à 8 atomes de carbone, les radicaux alkyles étant de préférence méthyle, éthyle, propyle, et octyle,
• un radical cycloalkyle contenant entre 5 et 8 atomes de carbone cycliques, éventuellement substitué,
• un radical aryle contenant entre 6 et 12 atomes de carbone pouvant être substitué, de préférence phényle ou dichlorophényle,
• une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles **Y'** sont semblables ou différents et représentent :
• le groupement **R1,**
• et/ou un groupement époxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
• et l'un au moins des symboles **Y'** représentant un groupement époxyfonctionnel.

7. Dispersion silicone aqueuse selon la revendication 5 **caractérisée en ce que** les groupements époxyfonctionnels du polyorganosiloxane époxyfonctionnalisé **(B)** sont choisis parmi les groupements suivants :

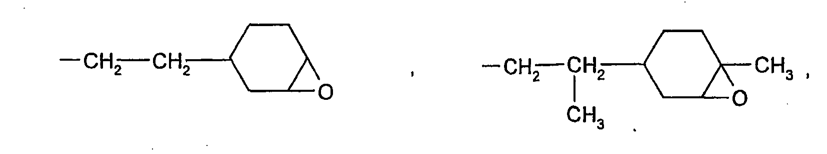

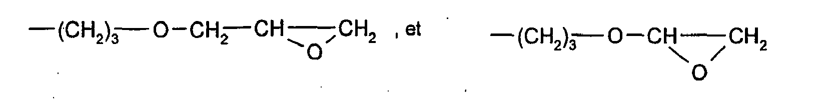

8. Dispersion silicone aqueuse selon l'une des revendications précédentes dans laquelle la résine polyorganosiloxanique **(A)** comprend avant émulsification :
- des substituants hydroxyles condensables et présents à hauteur d'au moins 0,05 % en poids ; et
- des motifs siloxyles D, T et éventuellement M et/ou Q, les motifs siloxyles T étant présents dans un % molaire compris entre 50 et 85 % et de préférence entre 55 et 80 %.

9. Dispersion silicone aqueuse selon la revendication 8 dans laquelle la résine polyorganosiloxanique **(A)** est une résine liquide polyorganosiloxane de type T(OH), DT(OH), DQ(OH), DT(OH), MQ(OH), MDT(OH) MDQ(OH) ou les mélanges de celles-ci et de préférence MDT(OH), DT(OH) ou les mélanges de celles-ci.

10. Procédé de préparation d'une dispersion silicone aqueuse (Disp), utilisable notamment dans la formulation de peintures, **caractérisé en ce qu'**il comprend les étapes essentielles successives ou non, suivantes :
a) préparation:
- d'un pré-mélange **I** comprenant au moins une résine polyorganosiloxanique **(A)** selon l'une des revendication 1, 2, ou 8, et d'un pré-mélange **II** comprenant au moins un polyorganosiloxane époxyfonctionnalisé **(B)** selon l'une des revendications 1, 2, 5, 6 ou 7, ou
- d'un pré-mélange **111** comprenant au moins une résine polyorganosiloxanique **(A)** selon l'une des revendication 1, 2, 8 ou 9 et au moins un polyorganosiloxane époxyfonctionnalisé **(B)** selon l'une des revendications1, 2, 5, 6 ou 7,
b) mise en émulsion avec de l'eau et en présence d'au moins un tensioactif **(TA):**
- de chaque pré-mélange **I** et **II** obtenu à l'étape a); ou
- du pré-mélange **III,** et
c) mélange :
- des émulsions obtenues à l'étape b) issues des pré-mélanges **I** et **II** avec au moins un silane alkylaminé hydroxylé hydrosoluble **(C)** selon l'une des revendications 1, 2 ou 4, ou
- de l'émulsion obtenue à l'étape b) issues du pré-mélange **III** avec au moins un silane alkylaminé hydroxylé hydrosoluble **(C)** selon l'une des revendications 1, 2 ou 4;
d) éventuel mûrissement de la dispersion issue de l'étape c) de manière que s'opère une réticulation par condensation et en émulsion de la résine, au sein des gouttelettes de phase silicone dispersée, pour obtenir in fine une dispersion

11. Formulation aqueuse, utilisable notamment dans la formulation de peintures, comprenant
- une dispersion silicone aqueuse selon l'une des revendications 1 à 9, ou issue du procédé de préparation selon la revendication 10, ladite dispersion silicone étant présente de préférence jusqu'à 150 % en poids par rapport au poids total d'une ou des dispersions organiques (liant(s)) et encore plus préférentiellement entre 40 et 100 % en poids;
- une charge siliceuse ou non, de préférence sélectionnée parmi les produits suivants : silice précipitée ou non, silice colloïdale ou en poudre, carbonates, talc, TiO2 et leurs mélanges ; et
au moins l'un des composés énumérés ci-après :
- une ou plusieurs dispersions organiques (liant(s)), choisies de préférence parmi celles comprenant des (co)polymères de styrène et/ou de l'acide (méth)acrylique;
- un ou plusieurs épaississants choisi, de préférence, parmi les épaississants cellulosiques acryliques, les polyuréthanes, les gommes naturelles et leurs mélanges ;
- un ou plusieurs agents de coalescence choisi, de préférence, parmi les solvants organiques et plus préférentiellement encore parmi les glycols et/ou les coupes pétrolières aliphatiques ;
- un ou plusieurs mouillants, dispersants de préférence choisi parmi les phosphates et/ou les polyacryliques ;
- un ou plusieurs agents de tension ;
- un ou plusieurs agents de neutralisation ;
- un ou plusieurs biocides ;
- un ou plusieurs diluant ;
- un ou plusieurs plastifiants, choisis, de préférence parmi les huiles silicones non réactives ;
- un ou plusieurs antimousses ;
- un ou plusieurs pigments ou colorants (organiques ou minéraux).

12. Peinture **caractérisée en ce qu'**elle comprend de la dispersion silicone aqueuse selon l'une quelconque des revendications 1 à 9, de la dispersion obtenue par mise en oeuvre du procédé selon la revendication 10 ou de la formulation aqueuse selon la revendication 11.

13. Utilisation de la dispersion silicone aqueuse selon l'une des revendications 1 à 9 ou de la formulation aqueuse selon la revendication 11 dans le domaine des peintures.

## Claims

1. Aqueous silicone dispersion, that can be used especially in the formulation of paints, mainly composed of:
a) at least one polyorganosiloxane resin **(A)** comprising condensable hydroxyl substituents present in an amount of at least 0.05% by weight;
b) at least one epoxy-functionalized polyorganosiloxane **(B);**
c) at least one water-soluble hydroxylated alkylaminosilane **(C)** present in its monomeric form of general formula **(I)** and/or in a condensed oligomeric type form: 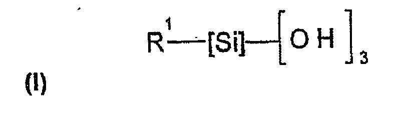 in which formula:
- R¹ is an aminoalkyl radical having 1 to 6 carbon atoms or a group of general formula: H₂N-(CH₂)ₓR²-(CH₂)_{z}-; with R² representing O, S, -NH- or NH-CH₂-CH₂-NH- and x ≥ 2, z ≥ 2;
d) at least one surfactant **(S);**
e) optionally at least one biocide **(D);**
f) water; and
g) optionally an effective amount of a polycondensation catalyst;
said aqueous silicone dispersion not containing any silane having hydrolyzable functional groups of alkoxy
- OR type with R being a C₁-C₂₀ aliphatic hydrocarbon group.

2. Aqueous silicone dispersion according to Claim 1, that can be used especially in the formulation of paints mainly composed of:
a) at least one polyorganosiloxane resin **(A)** comprising condensable hydroxyl substituents present in an amount of at least 0.05% by weight;
b) at least one epoxy-functionalized polyorganosiloxane **(B);**
c) at least one water-soluble hydroxylated alkylaminosilane (C) present in its monomeric form of general formula (I) and/or in a condensed oligomeric type form: 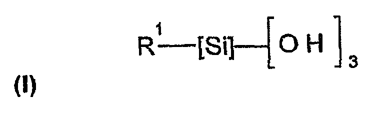 in which formula:
- R¹ is an aminoalkyl radical having 1 to 6 carbon atoms or a group of general formula: H₂N-(CH₂)ₓR²-(CH₂)_{z}-; with R² representing O, S, -NH- or NH-CH₂-CH₂-NH- and x ≥ 2, z ≥ 2;
d) at least one surfactant **(S);**
e) optionally at least one biocide **(D);** and
f) water;
said aqueous silicone dispersion not containing any silane having hydrolyzable functional groups of alkoxy
- OR type with R being a C₁-C₂₀ aliphatic hydrocarbon group.

3. Aqueous silicone dispersion according to either of the preceding claims, **characterized in that** the aqueous dispersion is in the form of an oil-in-water emulsion.

4. Aqueous silicone dispersion according to one of the preceding claims, in which the water-soluble hydroxylated alkylaminosilane **(C)** is present up to 15% by weight relative to the total weight of the dispersion, preferably present up to 10% and even more preferably between 0.5 and 7% by weight.

5. Aqueous silicone dispersion according to one of the preceding claims, in which the epoxy-functionalized polyorganosiloxane **(B)** comprises at least one epoxy-functional radical **Y,** linked to the silicon via a divalent radical containing from 2 to 20 carbon atoms and possibly containing at least one heteroatom, preferably oxygen, bearing at least one epoxy unit, **Y** preferably being chosen from the following radicals:

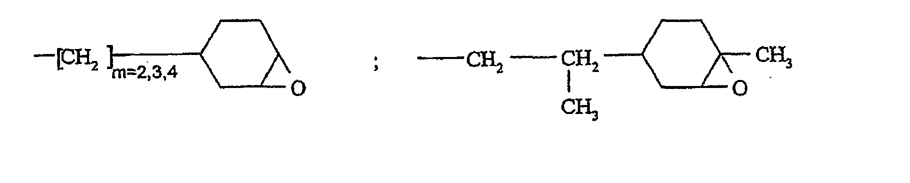

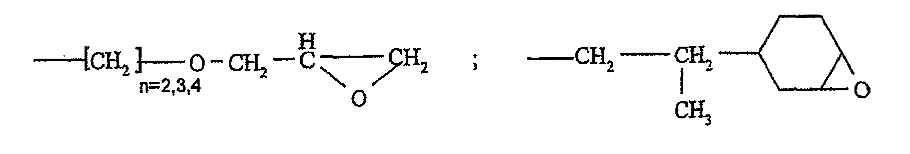

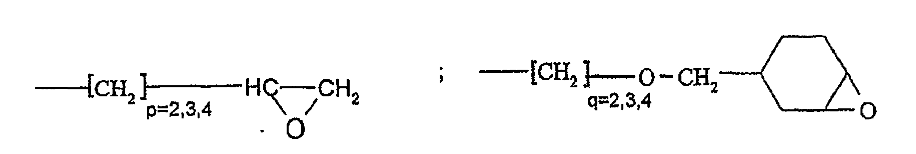

6. Aqueous silicone dispersion according to one of the preceding claims, in which the epoxy-functionalized polyorganosiloxane **(B)** is composed of units of formula **(V)** and terminated by units of formula **(VI)** and/or composed of units of formula **(V)** represented below: 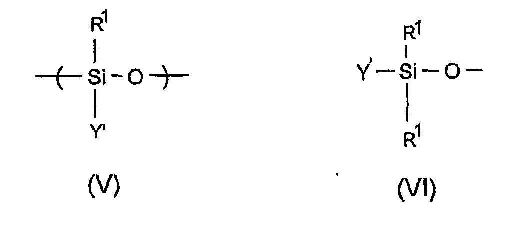 in which:
- the **R¹** symbols are the same or different and represent:
• a linear or branched alkyl radical containing 1 to 8 carbon atoms, the alkyl radicals preferably being methyl, ethyl propyl and octyl;
• an optionally substituted cycloalkyl radical containing between 5 and 8 cyclic carbon atoms;
• an aryl radical containing between 6 and 12 carbon atoms which may be substituted, preferably a phenyl or dichlorophenyl radical;
• an arylkyl part having an alkyl part containing between 5 and 14 carbon atoms and an aryl part containing between 6 and 12 carbon atoms, optionally substituted on the aryl part by halogens, alkyl groups and/or alkoxy groups containing 1 to 3 carbon atoms;
- the **Y'** symbols are the same or different and represent:
• the group **R¹;** and/or
• an epoxy-functional group, linked to the silicon of the polyorganosiloxane via a divalent radical containing from 2 to 20 carbon atoms and which may contain at least one heteroatom, preferably oxygen; and
• at least one of the **Y'** symbols representing an epoxy-functional group.

7. Aqueous silicone dispersion according to Claim 5, **characterized in that** the epoxy-functional groups of the epoxy-functionalized polyorganosiloxane **(B)** are chosen from the following groups:

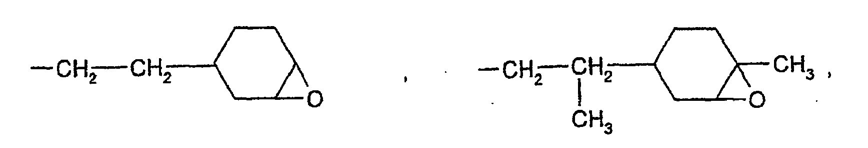

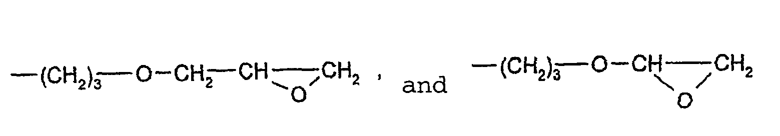

8. Aqueous silicone dispersion according to one of the preceding claims, in which the polyorganosiloxane resin **(A)** comprises, before emulsification:
- condensable hydroxyl substituents present in an amount of at least 0.05% by weight; and
- D, T and optionally M and/or Q siloxyl units, the T siloxyl units being present in a molar % between 50 and 85% and preferably between 55 and 80%.

9. Aqueous silicone dispersion according to Claim 8, in which the polyorganosiloxane resin **(A)** is a liquid polyorganosiloxane resin of T(OH), DT(OH), DQ(OH), DT(OH), MQ(OH), MDT(OH), MDQ(OH) type or mixtures thereof, and preferably MDT(OH), DT(OH) or mixtures thereof.

10. Method of preparing an aqueous silicone dispersion (Disp), that can be used especially in the formulation of paints, **characterized in that** it comprises the following essential, successive or non-successive steps:
a) preparation:
- of a premix **I** comprising at least one polyorganosiloxane resin **(A)** according to one of Claims 1, 2 or 8, and a premix **II** comprising at least one epoxy-functionalized polyorganosiloxane **(B)** according to one of Claims 1, 2, 5, 6 or 7 or
- a premix **III** comprising at least one polyorganosiloxane resin **(A)** according to one of Claims 1, 2, 8 or 9 and at least one epoxy-functionalized polyorganosiloxane **(B)** according to one of Claims 1, 2, 5, 6 or 7;
b) emulsification with water and in the presence of at least one surfactant **(S):**
- of each premix **I** and **II** obtained in step a); or
- of the premix **III;** and
c) mixing:
- the emulsions obtained in step b) derived from the premixes **I** and **II** with at least one water-soluble hydroxylated alkylaminosilane **(C)** according to one of Claims 1, 2 or 4; or
- the emulsion obtained in step b) derived from the premix **III** with at least one water-soluble hydroxylated alkylaminosilane **(C)** according to one of Claims 1, 2 or 4; and
d) optional curing of the dispersion derived from step c) so that crosslinking by condensation and in an emulsion of the resin takes place within the droplets of the dispersed silicone phase, in order to obtain a dispersion in the end.

11. Aqueous formulation, which can be used especially in the formulation of paints, comprising:
- an aqueous silicone dispersion according to one of Claims 1 to 9, or resulting from the preparation method according to Claim 10, said silicone dispersion being preferably present up to 150% by weight relative to the total weight of one or some of the organic dispersions (binder(s)) and even more preferably between 40 and 100% by weight;
- a siliceous or nonsiliceous filler, preferably chosen from the following products: precipitated or unprecipitated silica, colloidal or powdered silica, carbonates, talc, TiO₂ and mixtures thereof; and at least one of the compounds listed below:
- one or more organic dispersions (binder(s)), preferably chosen from those comprising (co)polymers of styrene and/or (meth)acrylic acid;
- one or more thickeners chosen, preferably, from acrylic cellulose thickeners, polyurethanes, natural gums and mixtures thereof;
- one or more coalescents chosen, preferably, from organic solvents and more preferably still from glycols and/or aliphatic petroleum cuts;
- one or more wetting agents or dispersants preferably chosen from phosphates and/or polyacrylics;
- one or more tension agents;
- one or more neutralizing agents;
- one or more biocides;
- one or more diluents;
- one or more plasticizers, preferably chosen from nonreactive silicone oils;
- one or more antifoaming agents; and
- one or more pigments or dyes (which are organic or mineral).

12. Paint, **characterized in that** it comprises the aqueous silicone dispersion according to any one of Claims 1 to 9, the dispersion obtained by implementing the method according to Claim 10 or the aqueous formulation according to Claim 11.

13. Use of the aqueous silicone dispersion according to one of Claims 1 to 9 or of the aqueous formulation according to Claim 11, in the field of paints.

## Patentansprüche

1. Wäßrige Silikondispersion, die insbesondere bei der Formulierung von Anstrichmitteln verwendbar ist, im wesentlichen bestehend aus:
a) mindestens einem Polyorganosiloxanharz (A) mit kondensierbaren Hydroxylsubstituenten in einer Menge von mindestens 0,05 Gew.-%;
b) mindestens einem epoxyfunktionalisierten Polyorganosiloxan (B),
c) mindestens einem wasserlöslichen hydroxylierten Alkylaminosilan (C) in seiner monomeren Form der allgemeinen Formel (I) und/oder in kondensierter Form vom Oligomer-Typ 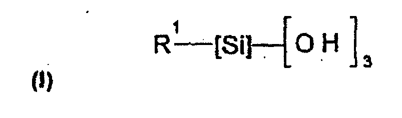 worin:
- R¹ ein Aminoalkylrest mit 1 bis 6 Kohlenstoffatomen oder eine Gruppe der allgemeinen Formel: H₂N-(CH₂)ₓR²-(CH₂)_{z}- ist,
wobei R² für O, S, -NH- oder NH-CH₂-CH₂-NH- steht und x ≥ 2, z ≥ 2;
d) mindestens einem Tensid (TA),
e) gegebenenfalls mindestens einem Biozid (D),
f) Wasser und
g) gegebenenfalls einer wirksamen Menge eines Polykondensationskatalysators;
wobei die wäßrige Silikondispersion kein Silan mit hydrolysierbaren Funktionen vom Typ Alkoxy -OR,
wobei R eine aliphatische C₁-C₂₀-Kohlenwasserstoffgruppe ist, enthält.

2. Wäßrige Silikondispersion nach Anspruch 1, die insbesondere bei der Formulierung von Anstrichmitteln verwendbar ist, im wesentlichen bestehend aus:
a) mindestens einem Polyorganosiloxanharz (A) mit kondensierbaren Hydroxylsubstituenten in einer Menge von mindestens 0,05 Gew.-%;
b) mindestens einem epoxyfunktionalisierten Polyorganosiloxan (B),
c) mindestens einem wasserlöslichen hydroxylierten Alkylaminosilan (C) in seiner monomeren Form der allgemeinen Formel (I) und/oder in kondensierter Form vom Oligomer-Typ 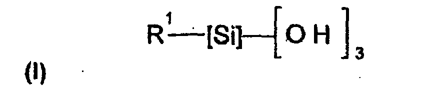 worin:
- R¹ ein Aminoalkylrest mit 1 bis 6 Kohlenstoffatomen oder eine Gruppe der allgemeinen Formel: H₂N-(CH₂)ₓR²-(CH₂)_{z}- ist,
wobei R² für O, S, -NH- oder NH-CH₂-CH₂-NH- steht und x ≥ 2, z ≥ 2;
d) mindestens einem Tensid (TA),
e) gegebenenfalls mindestens einem Biozid (D) und
f) Wasser;
wobei die wäßrige Silikondispersion kein Silan mit hydrolysierbaren Funktionen vom Typ Alkoxy -OR,
wobei R eine aliphatische C₁-C₂₀-Kohlenwasserstoffgruppe ist, enthält.

3. Wäßrige Silikondispersion nach einem der vorhergehenden Ansprüche, **dadurch gekennzeichnet, daß** die wäßrige Dispersion in Form einer Öl/Wasser-Emulsion vorliegt.

4. Wäßrige Silikondispersion nach einem der vorhergehenden Ansprüche, worin das wasserlösliche hydroxylierte Alkylaminosilan (C) in einer Menge von bis zu 15 Gew.-%, bezogen auf das Gesamtgewicht der Dispersion, vorzugsweise bis zu 10 Ges.-% und noch weiter bevorzugt zwischen 0,5 und 7 Gew.-% vorliegt.

5. Wäßrige Silikondispersion nach einem der vorhergehenden Ansprüche, worin das epoxyfunktionalisierte Polyorganosiloxan (B) mindestens einen epoxyfunktionellen Rest Y umfaßt, der über einen zweiwertigen Rest mit 2 bis 20 Kohlenstoffatomen an das Silicium gebunden ist, mindestens ein Heteroatom, vorzugsweise Sauerstoff, enthalten kann und mindestens eine Epoxyeinheit trägt, wobei Y vorzugsweise aus den folgenden Resten ausgewählt ist:

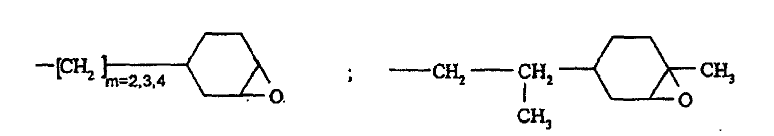

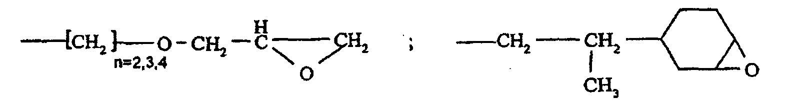

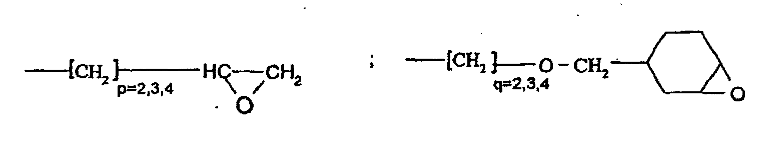

6. Wäßrige Silikondispersion nach einem der vorhergehenden Ansprüche, worin das epoxyfunktionalisierte Polyorganosiloxan (B) aus Einheiten der Formel (V) besteht und durch Einheiten der Formel (VI) terminiert ist und/oder aus den nachstehend wiedergegebenen Einheiten der Formel (V) besteht: 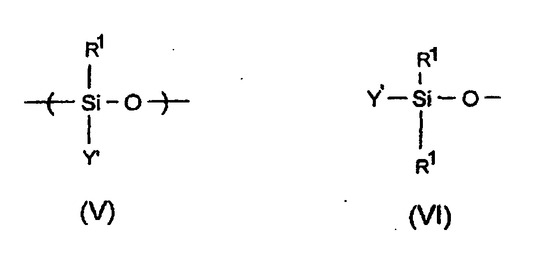 worin:
- die Symbole R1 gleich oder verschieden sind und für:
einen linearen oder verzweigten Alkylrest mit 1 bis 8 Kohlenstoffatomen, wobei es sich bei den Alkylresten vorzugsweise um Methyl, Ethyl, Propyl oder Octyl handelt,
einen gegebenenfalls substituierten Cycloalkylrest mit zwischen 5 und 8 Ringkohlenstoffatomen,
einen Arylrest mit zwischen 6 und 12 Kohlenstoffatomen, der substituiert sein kann, vorzugsweise Phenyl oder Dichlorphenyl,
einen Aralkylteil mit einem Alkylteil mit zwischen 5 und 14 Kohlenstoffatomen und einem Arylteil mit zwischen 6 und 12 Kohlenstoffatomen, der gegebenenfalls am Arylteil durch Halogene, Alkylgruppen und/oder Alkoxygruppen mit 1 bis 3 Kohlenstoffatomen substituiert ist,
stehen,
- die Symbole Y' gleich oder verschieden sind und für:
. die Gruppe R1,
. und/oder eine epoxyfunktionelle Gruppe, die über einen zweiwertigen Rest mit 2 bis 20 Kohlenstoffatomen an das Silicium gebunden ist und mindestens ein Heteroatom, vorzugsweise Sauerstoff, enthalten kann, stehen, und wobei mindestens eines der Symbole Y' für eine epoxyfunktionelle Gruppe steht.

7. Wäßrige Silikondispersion nach Anspruch 5, **dadurch gekennzeichnet, daß** die epoxyfunktionellen Gruppen des epoxyfunktionalisierten Polyorganosiloxans (B) aus den folgenden Gruppen ausgewählt sind:

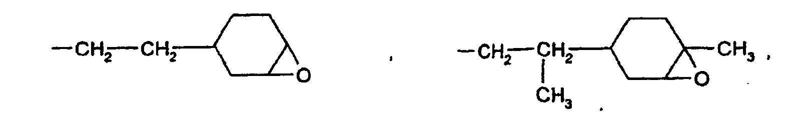

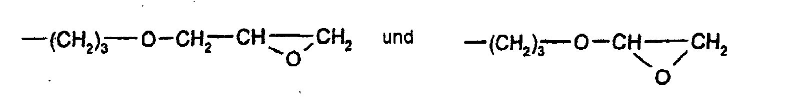

8. Wäßrige Silikondispersion nach einem der vorhergehenden Ansprüche, worin das Polyorganosiloxanharz (A) vor der Emulgierung:
- kondensierbare Hydroxylsubstituenten in einer Menge von mindestens 0,05 Gew.-% und
- D-, T- und gegebenenfalls M- und/oder Q-Siloxyleinheiten, wobei die T-Siloxyleinheiten in einer Menge zwischen 50 und 85 Mol-% und vorzugsweise zwischen 55 und 80 Mol-% vorliegen,
umfaßt.

9. Wäßrige Silikondispersion nach Anspruch 8, worin es sich bei dem Polyorganosiloxanharz (A) um ein flüssiges Polyorganosiloxanharz vom Typ T(OH), DT(OH), DQ(OH), DT(OH), MQ(OH), MDT(OH), MDQ(OH) oder Mischungen davon und vorzugsweise MDT(OH), DT(OH) oder Mischungen davon handelt.

10. Verfahren zur Herstellung einer wäßrigen Silikondispersion (Disp), die insbesondere bei der Formulierung von Anstrichmitteln verwendbar ist, **dadurch gekennzeichnet, daß** es die folgenden aufeinanderfolgenden oder nicht aufeinanderfolgenden wesentlichen Schritte umfaßt:
a) Herstellung:
- einer Vormischung I, die mindestens ein Polyorganosiloxanharz (A) gemäß einem der Ansprüche 1, 2 oder 8 umfaßt, und einer Vormischung II, die mindestens ein epoxyfunktionalisiertes Polyorganosiloxan (B) gemäß einem der Ansprüche 1, 2, 5, 6 oder 7 umfaßt, oder
- einer Vormischung III, die mindestens ein Polyorganosiloxanharz (A) gemäß einem der Ansprüche 1, 2, 8 oder 9 und mindestens ein epoxyfunktionalisiertes Polyorganosiloxan (B) gemäß einem der Ansprüche 1, 2, 5, 6 oder 7 umfaßt,
b) Emulgieren:
- jeder in Schritt a) erhaltenen Vormischung I und II oder
- der Vormischung III
mit Wasser und in Gegenwart mindestens eines Tensids (TA) und
c) Mischen:
- der in Schritt b) aus den Vormischungen I und II erhaltenen Emulsionen mit mindestens einem wasserlöslichen hydroxylierten Alkylaminosilan (C) gemäß einem der Ansprüche 1, 2 oder 4 oder
- der in Schritt b) aus der Vormischung III erhaltenen Emulsion mit mindestens einem wasserlöslichen hydroxylierten Alkylaminosilan (C) gemäß einem der Ansprüche 1, 2 oder 4;
d) fakultative Reifung der aus Schritt c) erhaltenen Dispersion, so daß eine Vernetzung durch Kondensation in der Emulsion des Harzes in den Tröpfchen der dispergierten Silikonphase stattfindet, wodurch man letztendlich eine Dispersion erhält.

11. Wäßrige Formulierung, die insbesondere bei der Formulierung von Anstrichmitteln verwendbar ist, umfassend
- eine wäßrige Silikondispersion gemäß einem der Ansprüche 1 bis 9 oder eine aus dem Herstellungsverfahren gemäß Anspruch 10 erhaltene wäßrige Silikondispersion, wobei die wäßrige Silikondispersion vorzugsweise in einer Menge bis zu 150 Gew.-%, bezogen auf das Gesamtgewicht einer oder mehrerer der organischen Dispersionen (Bindemittel), und noch weiter bevorzugt zwischen 40 und 100 Gew.-% vorliegt;
- einen siliciumhaltigen oder nicht siliciumhaltigen Füllstoff, der vorzugsweise aus den folgenden Produkten ausgewählt ist: gefälltes Siliciumdioxid oder nicht gefälltes Siliciumdioxid, kolloidales oder pulverförmiges Siliciumdioxid, Carbonate, Talk, TiO₂ und Mischungen davon; und
mindestens eine der nachstehend aufgeführten Verbindungen:
- eine oder mehrerer organische Dispersionen (Bindemittel), die vorzugsweise aus denjenigen ausgewählt sind, die (Co)polymere von Styrol und/oder (Meth)acrylsäure umfassen;
- einen oder mehrere Verdicker, die vorzugsweise aus Acrylcellulose-Verdickern, Polyurethanen, Naturgummen und Mischungen davon ausgewählt sind;
- ein oder mehrere Koaleszenzmittel, die vorzugsweise aus organischen Lösungsmitteln und noch weiter bevorzugt aus Glykolen und/oder aliphatischen Erdölschnitten ausgewählt sind;
- ein oder mehrere Netz- oder Dispergiermittel, die vorzugsweise aus Phosphaten und/oder Polyacrylverbindungen ausgewählt sind;
- ein oder mehrere Spannungsmittel;
- ein oder mehrere Neutralisationsmittel; ein oder mehrere Biozide;
- ein oder mehrere Verdünnungsmittel;
- einen oder mehrere Weichmacher, die vorzugsweise aus unreaktiven Silikonölen ausgewählt sind;
- ein oder mehrere Antischaummittel;
- ein oder mehrere Pigmente oder Farbmittel (organisch oder anorganisch).

12. Anstrichmittel, **dadurch gekennzeichnet, daß** es die wäßrige Silikondispersion gemäß einem der Ansprüche 1 bis 9, die durch Durchführung des Verfahrens gemäß Anspruch 10 erhaltene Dispersion oder die wäßrige Formulierung gemäß Anspruch 11 umfaßt.

13. Verwendung der wäßrigen Silikondispersion gemäß einem der Ansprüche 1 bis 9 oder der wäßrigen Formulierung gemäß Anspruch 11 auf dem Gebiet der Anstrichmittel.
